(19) Europäisches Patentamt
European Patent Office
Office européen des brevets

(11) Publication number: **0 124 162**
**A2**

(12) # EUROPEAN PATENT APPLICATION

(21) Application number: **84200498.8**

(22) Date of filing: **09.04.84**

(51) Int. Cl.³: **B 01 D 53/34**, C 01 B 17/05

(30) Priority: **02.05.83 US 490931**

(43) Date of publication of application: **07.11.84**
**Bulletin 84/45**

(84) Designated Contracting States: **BE CH DE GB IT LI NL SE**

(71) Applicant: **STAUFFER CHEMICAL COMPANY, Westport Connecticut 06880 (US)**

(72) Inventor: **Orcutt, John Chandler, 21 Somerston Road, Yorktown Heights, N.Y. 10598 (US)**
Inventor: **Van Brocklin, Lester Paul, 7 Hillside Drive, Thiells, N.Y. 10984 (US)**

(74) Representative: **Urbanus, Henricus Maria, Ir. et al, c/o Vereenigde Octrooibureaux Nieuwe Parklaan 107, NL-2587 BP 's-Gravenhage (NL)**

(54) **Treatment of low concentration H2S gas streams in liquid phase Claus reactor.**

(57) Gas streams containing low concentrations, e.g., under 20 vol. %, of $H_2S$ can be treated in a liquid phase Claus reactor under superatmospheric pressure. The use of such higher pressures aids in solubilizing the $H_2S$ and allows for its removal from such streams even though it is present in very dilute form.

SINGLE CONTINUOUS STIRRED TANK REACTOR

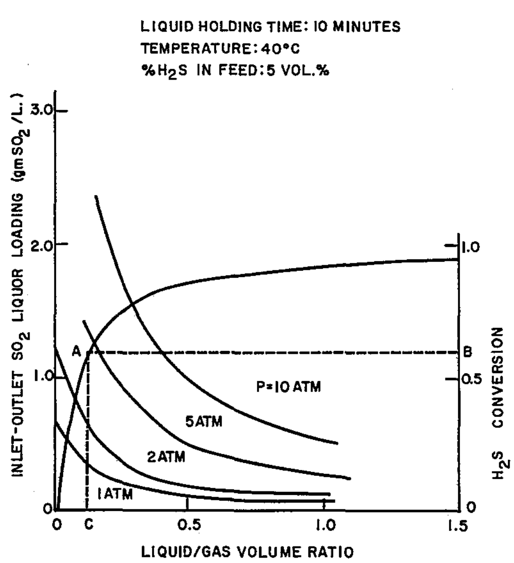


EP 0 124 162 A2

# TREATMENT OF LOW CONCENTRATION $H_2S$ GAS STREAMS IN LIQUID PHASE CLAUS REACTOR

## Background of the Invention

### Field of the Invention

The present invention relates to the removal of $H_2S$ from gas streams using a liquid phase Claus reaction.

### Description of the Prior Art

The liquid phase Claus reaction relies upon the reaction of an $H_2S$-containing gas stream with an $SO_2$-rich liquid absorbent producing sulfur and is a well-known reaction.

Early work by J. L. Keller (U.S. Patent No. 2,729,543) indicated that in such systems the rate of reaction between $H_2S$ and thiosulfuric acid (derived from sulfur dioxide) was independent of the hydrogen sulfide pressure. This work appreciated that the pressure largely determines the rate at which $H_2S$ dissolves in the absorbent but that the rate of reaction was substantially independent of the rate of solution, although, it could not exceed the rate of solution. The rate of reaction was said by Keller to depend on the pH of the absorbent, the temperature at which the reaction was carried out, and the concentration of thiosulfate ion in the absorbent. It was stated that the rate of reaction did not depend to any substantial extent on the concentration of dissolved $H_2S$ or its pressure over the solution. Keller did not discuss treatment of gas streams containing very low concentrations of $H_2S$ in a liquid phase Claus reactor.

Some more recent patents (i.e., U.S. Patent No. 3,983,225 and British Patent No. 1,450,845) have indicated, contrary to Keller's teaching, that the liquid phase Claus reaction could operate at superatmospheric pressure to promote the solubility of $H_2S$ in the absorbent and that at higher pressures the reaction times are the shortest. Such patents have shown the actual reaction of gas streams containing as low as 40% by volume $H_2S$ (Example 2 of U.S. Patent No. 3,983,225) while indicating the use of somewhat lower concentrations (e.g., at least 20% by volume) elsewhere in their specifications. Nevertheless, the art generally recognized that the liquid phase Claus reaction was not designed to remove very low concentrations (e.g., less than 20 vol. %) of $H_2S$. For example, L. M. Lehman et al., Hydrocarbon Processing, September 1977, pp. 109-116, indicated that the "Phosphate Process" (developed by Stauffer Chemical Company), a representative liquid phase Claus reaction, is "capable of functioning with $H_2S$ feed concentrations as low as 30%" (at p. 11).

Certain prior art references have indicated that the liquid phase Claus reaction was reaction rate controlled. Representative references of this type include: W. N. Marchant et al., "The Chemical Reactions of Sulfur in the Citrate Process for Flue Gas Desulfurization", U.S. Department of the Interior, Bureau of Mines, Report of Investigations 8540; G. C. Thom et al., "A Mechanistic Interpretation of the Reduction of Sulfur Dioxide to Elemental Sulfur in Regenerable Flue Gas Desulfurization Processes", American Chemical Society Meeting paper, September 10, 1979; and G. T. Rochelle et al., "Process Alternatives for Stack Gas Desulfurization with Regeneration to Produce Sulfur", AIChE Symposium Series 188, Volume 75, pp. 48-61 (1979).

The above references, including J. L. Keller U.S. Patent No. 2,729,543, all have as data results from well stirred and back mixed reactors. In such reactors chemical reactions which are faster than the residence time of the back mixed reactor can be obscured if the reaction products of the fast reactions continue to react to other species. This appears to happen here. The results discussed below indicate that the liquid phase Claus reaction

$$2H_2S + SO_2 \longrightarrow 3S + 2H_2O$$

is actually very fast. However, in a several minute residence time backmixed reactor the sulfur and $SO_2$ ($HSO_3^-$) have time to react to thiosulfate.

$$S + HSO_3^- \longrightarrow S_2O_3^=$$

When this occurs, the thiosulfate must then be reacted out with $H_2S$ by the reaction.

$$2H^+ + 2H_2S\ S_2O_3^= \longrightarrow 4S + 3H_2O$$

This last reaction is then the kinetic rate controlling reaction for the backmixed reactor, but not for a fast, pipe reactor. The Bureau of Mines Report in its Figure 3 demonstrates that the rate of thiosulfate reaction is the same as the overall reaction in a stirred continuous reactor. They state on page 7 that the thiosulfate decomposition reaction is the rate limiting step. In

actuality, thiosulfate formation depends upon the reactor design and residence time as illustrated below.

Data shown in British Patent No. 1,450,845 illustrate that the reaction is actually mass transfer controlled and that the liquid phase Claus reaction rate is nearly instantaneous. For example, pipe reactor experiments in that patent found that there was a minimum liquid flow required in the particular pipe used for the reaction to proceed at a fast rate (about 3 gallons/minute/0.5 in. pipe). A substantial 30% to 130% excess $H_2S$ was present during such experiments. At above 3 gallons/minute liquid flow rate, sulfur formation in large amounts visually confirmed the very rapid reaction of $H_2S$ and $SO_2$ to sulfur contrary to the teachings of the Bureau of Mines report, above, and U.S. Patent No. 2,729,543 to J. L. Keller. Liquid analysis also confirmed formation of sulfur and the disappearance of $SO_2$ with no formation of $S_2O_3$.

Examples 3 and 4 of British Patent No. 1,450,845 show complete regeneration of liquor in about two seconds at higher than three gallon per minute flows. Example 2 shows incomplete regeneration at one gallon per minute due to presence of about 0.25 gm/liter $SO_2$ in the outlet liquor which would be characteristic of unregenerated solutions. The overall process with recycle to an $SO_2$ absorber cannot maintain abatement unless residual $SO_2$ in the reactor effluent is less than about 0.1 gm./liter $SO_2$. In addition, visual examination of the pipe shows slug flow at one gallon per minute flows with very poor mixing. This is the reason for poor mass transfer and poor reaction rate at one gallon per minute flow rates but longer

residence times. At flow rates of over three gallongs per minute the mixing was excellent due to dispersed bubble flow.

Summary of the Present Invention

In the present invention a gas stream containing less than 20 vol. % $H_2S$ is reacted in a liquid phase Claus reactor at superatmospheric pressure to remove the $H_2S$ from the stream with the formation of sulfur.

Description of the Drawings

The Drawings, which form a portion of the present specification, serve to further illustrate the present invention wherein Figs. 1-3 each illustrate calculated values of reaction characteristics of dilute $H_2S$ and aqueous $SO_2$ to sulfur in three types of reactors.

Description of Preferred Embodiments

The liquid phase Claus reaction to which the present process pertains is well known. In such a process an $SO_2$-rich absorbent is brought into contact with an $H_2S$-containing gas stream with the production of sulfur by the following reaction:

$$2H_2S+SO_2 \longrightarrow 3S+2H_2O$$

Representative patents which describe such processes include: U.S. Patent No. 3,911,093 to F. G. Sherif et al.; U.S. Patent No. 3,983,225 to L. Van Brocklin et al.; and the above-described U.S. Patent No. 2,729,543

and British Patent No. 1,450,845. The preferred absorbent is a liquid absorbent for $SO_2$ (e.g., a phosphate or citrate aqueous solution or organic acid with a pKa of 2-7, etc.). The contacting of $SO_2$-rich absorbent and $H_2S$-gas can be carried out under the following process conditions: temperature: 20° to 160°C., preferably 20-95°C.; pH of absorbent: 2.5 to 6.5; buffer concentrations of up to about 2.5 molar; $SO_2$ concentrations of up to about 100 gm./l.; and use of superatmospheric pressures.

To illustrate the effects of pressure, Figs. 1-3 present calculated values of reaction characteristics of gaseous dilute $H_2S$ (5 vol. %) and aqueous solution of $SO_2$ to sulfur in three different reaction systems. The first system (Fig. 1) is a single, well mixed, gas-liquid tank reactor. The second (Fig. 2) employs two such reactors in series with countercurrent gas-liquid flow. The third (Fig. 3) uses a single cocurrent gas-liquid pipe reactor.

The reaction of $H_2S$ and $SO_2$ in the liquid phase is assumed to be essentially instantaneous. Therefore, the reaction rate depends upon the mass transfer rate of the slightly soluble $H_2S$ from the gas phase to the liquid phase. The mass transfer coefficients for the operations are assumed to be 1.7 $min^{-1}$ for the stirred tanks and 3.0 $min^{-1}$ for the pipe reactor. Such values are consistent with the literature.

In Figs. 1, 2, and 3 the abscissa represents the volumetric ratio, L/G, of liquid to gas under pressure entering the reaction systems. The liquid residence time on a gas free basis is 10 minutes for each reactor. The set of curves on the left indicate the grams of $SO_2$

per liter reacted out of the liquid for a given L/G ratio at pressures varying from 1 atmosphere to 10 atmospheres. Simultaneously, the curve to the right gives values of $H_2S$ conversion to sulfur versus L/G.

For example, in Fig. 1 the 10 atmosphere curve shows that between 0.5 and 2.4 gms/liter of $SO_2$ can be removed from the liquor as the liquid to gas ratio varies. At liquid to gas ratios near 1.0, the conversion (reaction of $H_2S$) is over 90%. However, at lower liquid to gas ratios, the fraction of $H_2S$ converted drops off because more gas and $H_2S$ enters the reactor, while the liquid volume (and area for mass transfer) remain constant. Conversely, as the liquid to gas ratio decreases, the liquid flow remains the same (at constant liquid residence time), while the total $H_2S$ tranferred increases due to the greater $H_2S$ concentration in the efflfuent gas. Therefore, the amount of $SO_2$ reacted per liter of liquid increases. Additionally, as pressure varies so does mass tranfer and the amount of $SO_2$ reacted.

The points A, B, and C refer to a case where there is a sixty percent conversion of $H_2S$ which gives $SO_2$ removal from inlet liquor varying between about 0.3 and 1.15 gms $SO_2$/l. depending on pressure. Higher pressures are required for higher conversions.

Figs. 2 and 3 are similar to Fig. 1 except there is greater residence time for the two reactor case and a better mass transfer driving force and mass transfer coefficient for the pipe reactor case.

In accordance with the present invention, a very low concentration $H_2S$-containing gas is treated in the above type of liquid phase Claus reaction. Preferably,

the $H_2S$ content is from about 0.5% to about 20%, by volume, of the gas. The treating occurs at superatmospheric pressure, e.g., from over about 1.0 to about 100 atmospheres, preferably from about 5-50 atmospheres. The use of superatmospheric pressure aids in promoting the reaction and also allows for a reduction in the size of the Claus reactor which is employed.

The foregoing description is provided to merely illustrate certain embodiments of the present invention and should not be construed in a limiting sense. The scope of protection desired is set forth in the claims which follow.

What is Claimed:

1. A process for the removal of $H_2S$ from a gas stream comprising under 20 volume % $H_2S$ which comprises feeding said gas stream to a liquid phase Claus reactor operating at superatmospheric pressure and containing an $SO_2$-rich liquid absorbent to produce sulfur.

2. A process as claimed in Claim 1 wherein the gas stream comprises from about 0.5 to about 20 volume % $H_2S$.

3. A process as claimed in Claim 1 wherein the pressure is from over about 1.0 up to about 100 atmospheres.

4. A process as claimed in Claim 1 wherein the absorbent is an aqueous absorbent.

5. A process as claimed in Claim 1 wherein the absorbent is an aqueous absorbent, the gas stream comprises from about 0.5 to about 20 volume % $H_2S$, and the pressure is from about 5 to about 50 atmospheres.

6. A process as claimed in Claim 5 wherein the absorbent is an aqueous phosphate absorbent.

7. A process as claimed in Claim 1 wherein the gas stream comprises from about 0.5 to about 20 volume % $H_2S$ and the absorbent is an aqueous absorbent.

8. A process as claimed in Claim 7 wherein the pressure is from about 5 to about 50 atmospheres and the absorbent is an aqueous phosphate absorbent.

9. A process as claimed in Claim 1 in which the liquid phase Claus reactor contains an absorbent selected from the group consisting of a phosphate aqueous solution, a citrate aqueous solution, and an organic acid.

SINGLE CONTINUOUS STIRRED TANK REACTOR

LIQUID HOLDING TIME: 10 MINUTES
TEMPERATURE: 40°C
% $H_2S$ IN FEED: 5 VOL.%

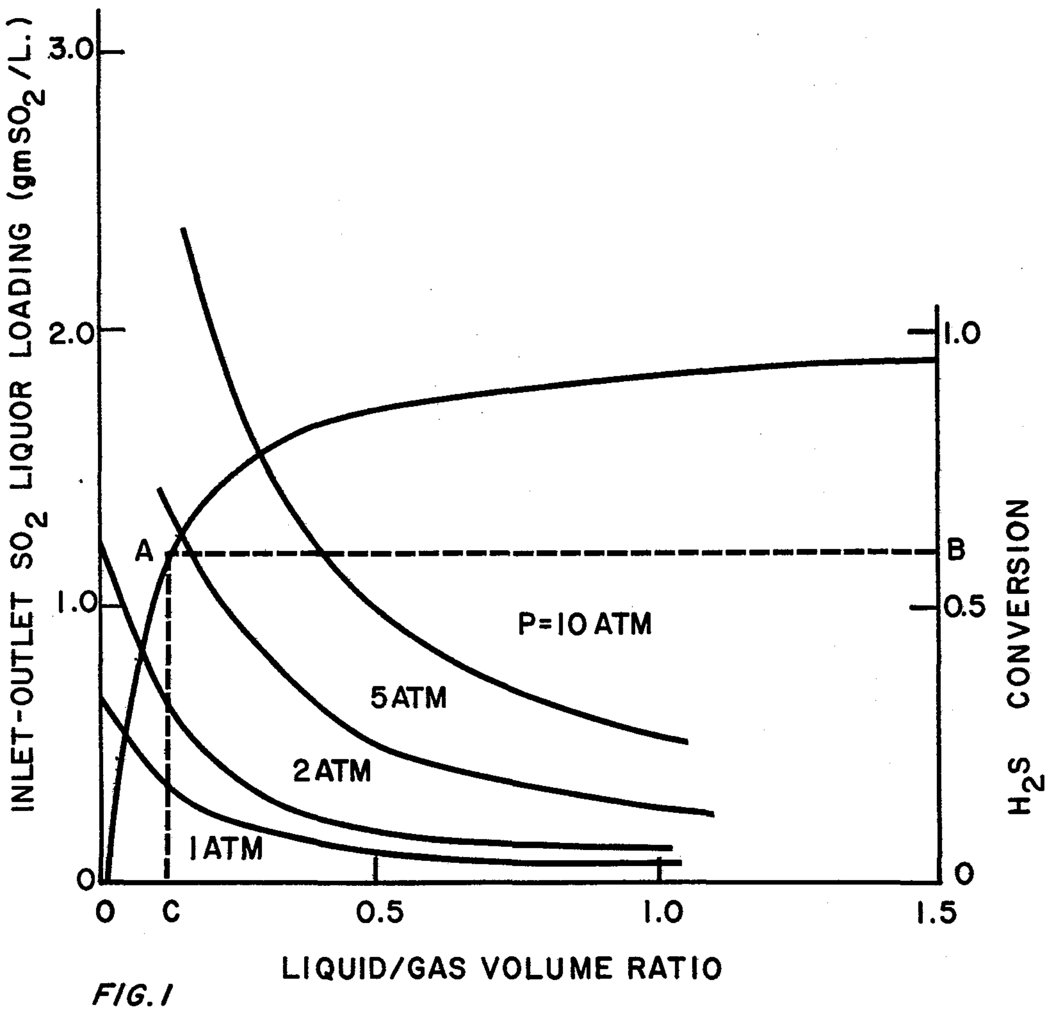


*FIG. 1*

TWO CONTINUOUS STIRRED TANKS IN SERIES

COUNTER FLOW GAS

LIQUID HOLDING TIME: 10 MINUTES EA. REACTOR

TEMPERATURE: 40°C

% $H_2S$ IN FEED: 5 VOL.%

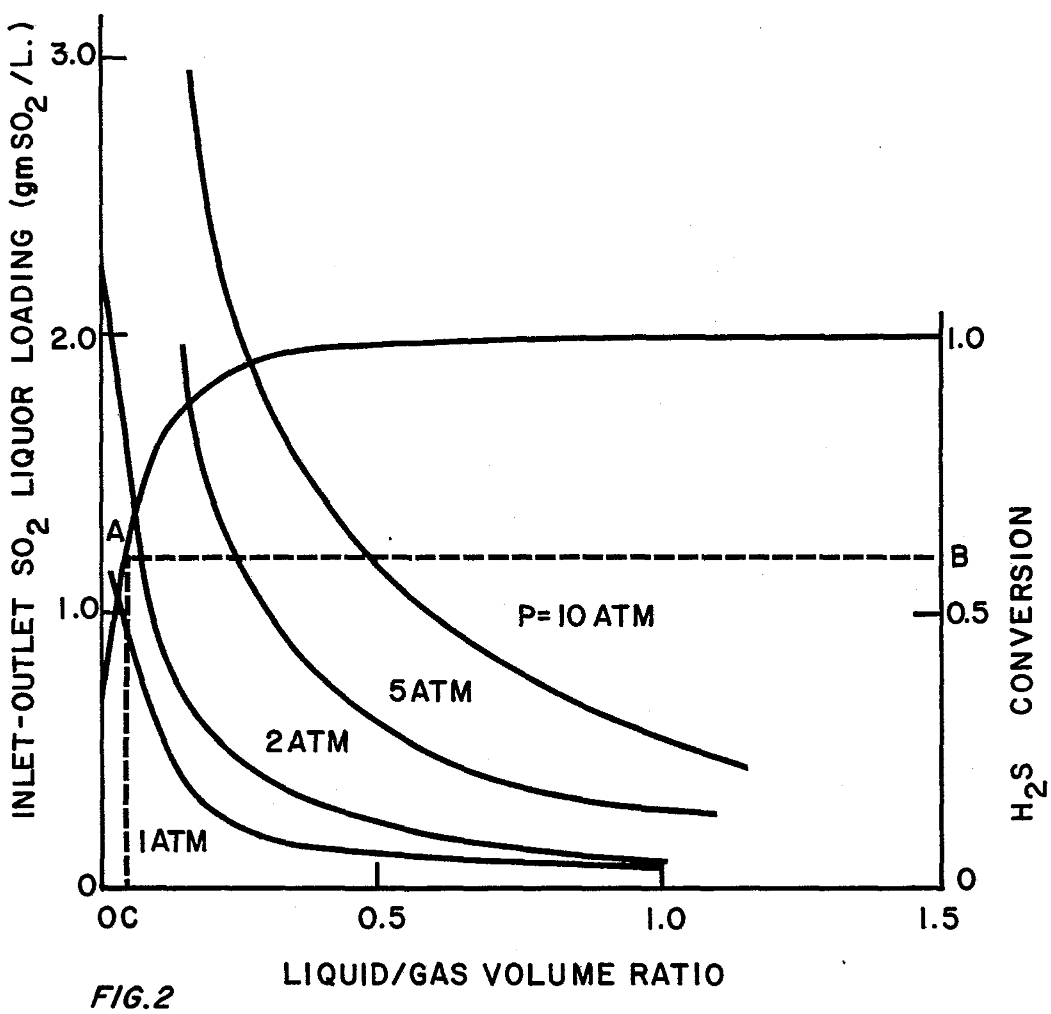


*FIG. 2*

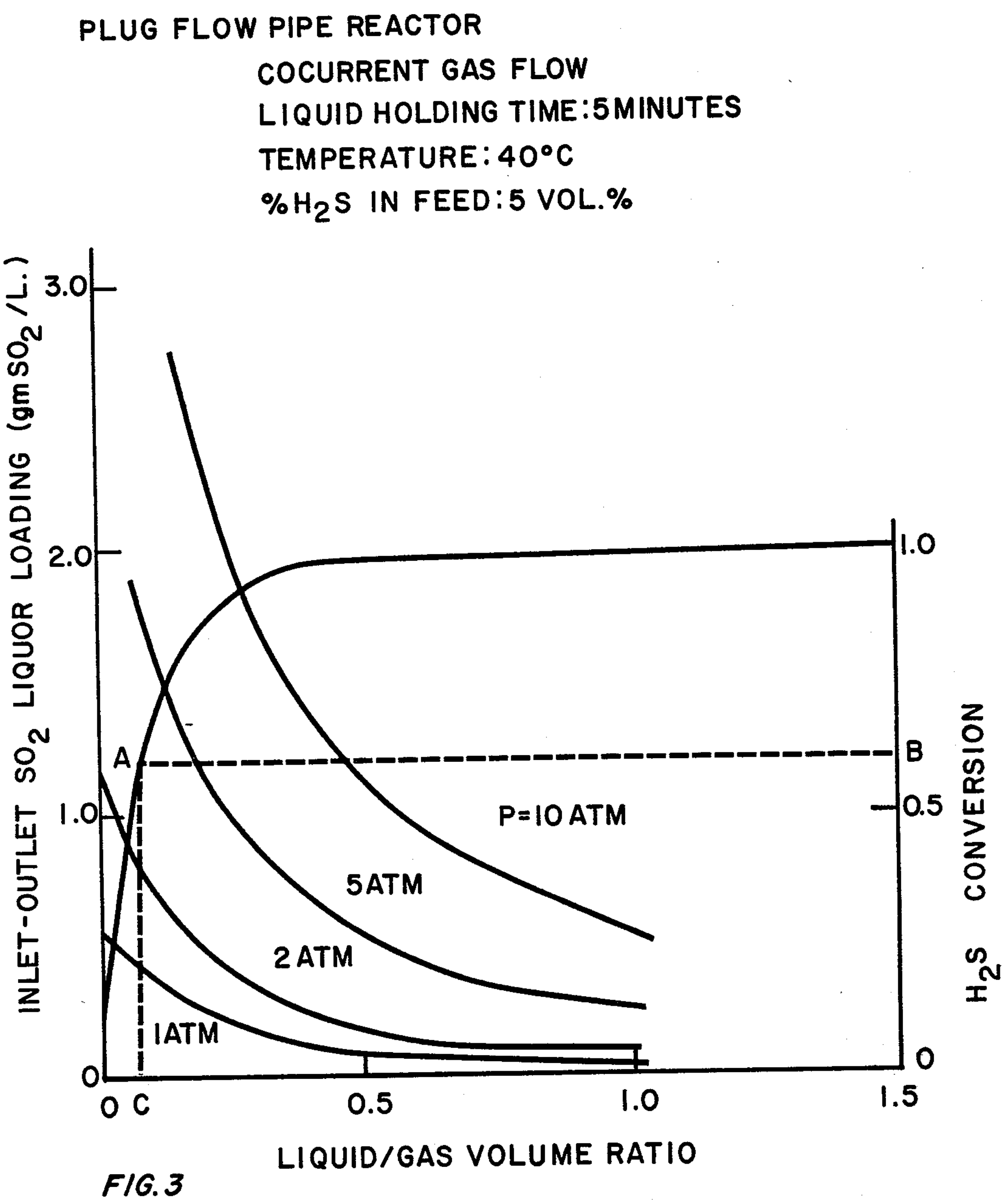
PLUG FLOW PIPE REACTOR
COCURRENT GAS FLOW
LIQUID HOLDING TIME: 5 MINUTES
TEMPERATURE: 40°C
% $H_2S$ IN FEED: 5 VOL.%
INLET-OUTLET $SO_2$ LIQUOR LOADING (gm $SO_2$/L.)
3.0
2.0
1.0
0
A
B
C
P=10 ATM
5 ATM
2 ATM
1ATM
1.0
0.5
0
$H_2S$ CONVERSION
0.5
1.0
1.5
LIQUID/GAS VOLUME RATIO

FIG. 3